# EUROPEAN PATENT SPECIFICATION

(11) **EP 1 734 790 B1**
(45) Date of publication and mention of the grant of the patent: **03.09.2008**
(21) Application number: 06115234.4
(22) Date of filing: 09.06.2006
(51) Int. Cl.: H05B 6/14, F16C 19/52

(54) **Inductive heating roller device**
Induktiv beheizte Rolle
Rouleau chauffé par induction

(30) Priority: 13.06.2005 JP 2005171854
(43) Date of publication of application: 20.12.2006
(73) Proprietor: Tokuden Co., Ltd, Kyoto-shi, Kyoto (JP)
(72) Inventor: Kitano, Yoshio TOKUDEN CO., LTD., Kyoto-shi Kyoto (JP); Okamoto Kozo TOKUDEN CO., LTD., Kyoto-shi Kyoto (JP); Yamamura, Yoshihiko TOKUDEN CO., LTD., Kyoto-shi Kyoto (JP)
(74) Representative: TBK-Patent

(56) References cited:
- EP-A- 1 194 012
- EP-A- 1 234 997
- DE-A1- 3 701 077
- US-A- 4 669 893
- US-A- 5 159 166

## Description

### BACKGROUND OF THE INVENTION

The present invention relates to an inductive heating roller device according to the preambles of claims 1 and 2 as is known from EP-A-1 194 012 and, more particularly, to a support structure for an inductive heating mechanism held in a floating state in a roller.

As well known in the art, a roller, which rotates while being inductively heated to a proper temperature, is used at a continuous heat treatment step of a sheet material or web material such as plastic films, paper, fabric, nonwoven fabric or metal foil. Specifically, an inductive heating mechanism is held in a floating state in a roller by attaching journals to the two sides of the internally hollow roller, by supporting drive shafts integral with the journals rotatably with respect to a machine platform, and by arranging an inductive heating mechanism in the roller and supporting the same with respect to the drive shafts by bearings.

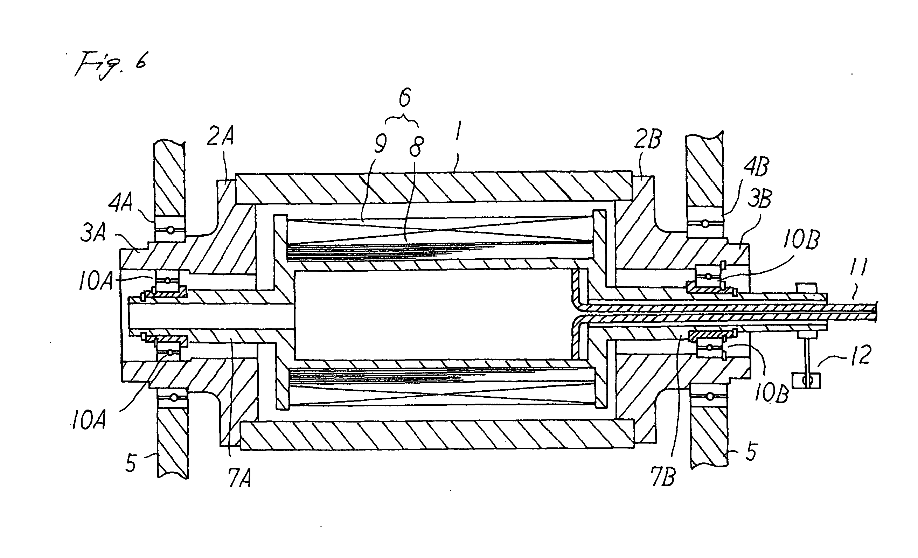

An example of the conventional inductive heating roller device is shown in Fig. 6. This constitution is described in the following. Numeral 1 designates a roller, and numerals 2A and 2B designate journals which are attached to the two sides of the roller. Numerals 3A and 3B designate hollow drive shafts, which are made integral with the journals 2A and 2B, respectively, and which are supported rotatably on a machine platform 5 through bearings 4A and 4B. Numeral 6 designates an inductive heating mechanism, which is constituted to include a cylindrical iron core 8, and an induction coil 9 wound on the outer circumference of the core.

Numerals 7A and 7B are support rods, which fix the inductive heating mechanism 6. These individual support rods are inserted into the drive shafts 3A and 3B, respectively, and are supported with respect to the drive shafts 3A and 3B through bearings 10A and 10B. As a result, the inductive heating mechanism 6 is supported in a floating state in the roller 1. Numeral 11 designates a lead wire, which is connected with the induction coil 9. This lead wire 11 is led through the inside of one support rod 7B to the outside so that it is connected with a desired AC power source. Numeral 12 designates a rotation stopper, which prevents the support rod 7B from being rotated by the rotation of the roller 1.
[Patent Document 1] JP-A-2003-157962

In this constitution, in which the inductive heating mechanism 6 arranged in the roller 1 is supported through the support rods 7A and 7B on the two sides by the individual drive shafts 3A and 3B and bearings 10A and 10B, it has been impossible to avoid the flextures in the inductive heating mechanism 6 or the support rods 7A and 7B. As a result, an irregular load is applied to the bearings 4A and 4B or 10A and 10B thereby to raise a problem that the bearings have short lifetimes.

US-A-5 159 166 describes a drawroll unit including a heatable gallette attached to a free-standing shaft end, wherein a solid rotating shaft is mounted in a fixed housing by bearings, which are damped by damping devices against vibrations occur due to a high-speed rotation of the gallette.

In US-A-4 669 893, a solid rotating shaft mounted in a cylindrical body by bearings is shown, wherein the cylindrical body is damped with a fluid in order to control an orbital movement of the shaft, the fluid being sealed in a reservoir by elastomeric O-rings.

DE 37 01 077 A1 discloses a gallette unit including a heatable gallette mounted on a free-standing end of a solid rotating shaft, wherein the other end of the shaft can be mounted in a bearing damped relative to a fixed housing by an elastic member against vibrations of the shaft due to a high-speed rotation of the gallette.

### SUMMARY OF THE INVENTION

An object of the invention is to provide an inductive heating roller device, in which an inductive heating mechanism arranged in a roller is supported through support rods 7A and 7B on the two sides through bearings inserted into individual drive shafts on the two sides of the roller, and in which the adverse affections on the bearings due to the flextures of the inductive heating mechanism or the support rods is simply reduced to solve such problems.

This object is achieved by an iductive heating roller device according to claim 1 or claim 2 of the invention.

According to the invention, that inductive heating roller device includes: a roller, an inductive heating mechanism, support rods fixed in the inductive heating mechanism, the support rods being inserted into the drive shafts of the roller and supported on inner faces of the drive shafts through bearings, and the inductive heating mechanism being held in a floating manner, and elastic members arranged either between the support rods and the bearings or between the inner faces of the drive shafts and the bearings.

According to the invention, the elastic members are arranged either between the support rods and the bearings or between the inner faces of the drive shafts and the bearings so that the flextures of the inductive heating mechanism or the support rods can be absorbed by those elastic members, to relax the application of an irregular load by the flextures to the bearings thereby to elongate the lifetime of the bearings. Moreover, this relaxation can suppresses the vibrations of the inductive heating mechanism or the support rods thereby to achieve smooth rotations of the rollers.

### BRIEF DESCRIPTION OF THE DRAWINGS

Fig. 1 is a section showing a bearing portion of a support rod of an inductive heating roller device according to an embodiment of the invention.
Fig. 2 is a section showing a bearing portion of a support rod of an inductive heating roller device according to another embodiment of the invention.
Fig. 3 is a section showing a bearing portion of a support rod of an inductive heating roller device according to another embodiment of the invention.
Fig. 4 is a section showing a bearing portion of a support rod of an inductive heating roller device according to another embodiment of the invention.
Fig. 5 is a section showing a bearing portion of a support rod of an inductive heating roller device according to another embodiment of the invention.
Fig. 6 is a section showing the entire constitution of one example of an inductive heating roller device.

### DETAILED DESCRIPTION OF THE PREFERRED EMBODIMENTS

In an inductive heating roller device, in which an inductive heating mechanism arranged in a roller is supported through support rods on the two sides through bearings inserted into individual drive shafts on the two sides of the roller, the purpose to simply reduce the adverse affections on the bearings due to the flextures of the inductive heating mechanism or the support rods is achieved by disposing the bearings through the elastic members.

### (Embodiment 1)

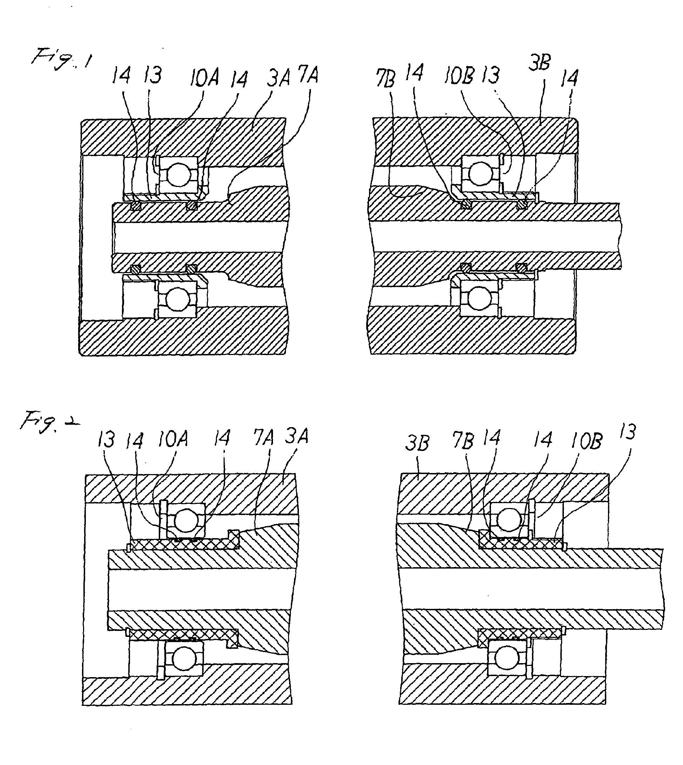

Fig. 1 is a section showing a bearing portion of a support rod of an inductive heating roller device according to an embodiment of the invention. Here, the constitutions of the roller and the inductive heating mechanism are similar to those of Fig. 6 so that they are omitted from Fig. 1 but the portions corresponding to those of the inductive heating roller device shown in Fig. 6 are designated by the common reference numerals. In Fig. 1, reference numerals 3A and 3B designate hollow drive shafts, which are made respectively integral with journals 2A and 2B attached to the two sides of a roller 1 similar to that of the inductive heating roller device shown in Fig. 6. Numerals 7A and 7B designate support rods fixing an inductive heating mechanism 6 like that of the inductive heating roller device, as shown in Fig. 6. Numerals 10A and 10B designate bearings. Numeral 13 designates a cylindrical spacer for filling the clearance between the inner diameters of the bearings 10A and 10B and the support rods 7A and 7B. Numeral 14 designates an elastic member such as an O-ring made of rubber.

The individual support rods 7A and 7B are inserted into the drive shafts 3A and 3B, respectively, and are supported with respect to the drive shafts 3A and 3B by the elastic O-ring 14, the cylindrical spacer 13 and the bearings 10A and 10B. By this support, the inductive heating mechanism is held in a floating manner in the roller so that the flextures of the inductive heating mechanism or the support rods 7A and 7B are absorbed by the elastic deformation of the O-ring 14 thereby to relax the application of an irregular load by the flextures to the bearings 10A and 10B.

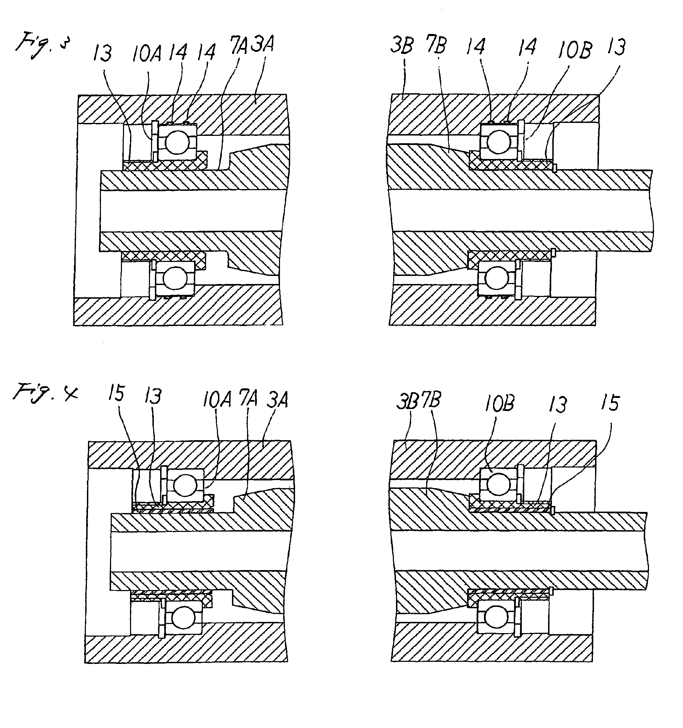

Here in the embodiment 1 shown in Fig. 1, the elastic O-ring 14 is mounted in the individual support rods 7A and 7B, but may also be mounted in the cylindrical spacer 13 so that the individual support rods 7A and 7B may be supported with respect to the drive shafts 3A and 3B by the cylindrical spacer 13, the elastic O-ring 14 and the bearings 10A and 10B. Moreover, the elastic O-ring 14 may also be mounted in the inner circumferences of the bearings 10A and 10B, as shown in Fig. 3, so that it may be supported with respect to the drive shafts 3A and 3B by the cylindrical spacer 13, the bearings 10A and 10B and the elastic O-ring 14.

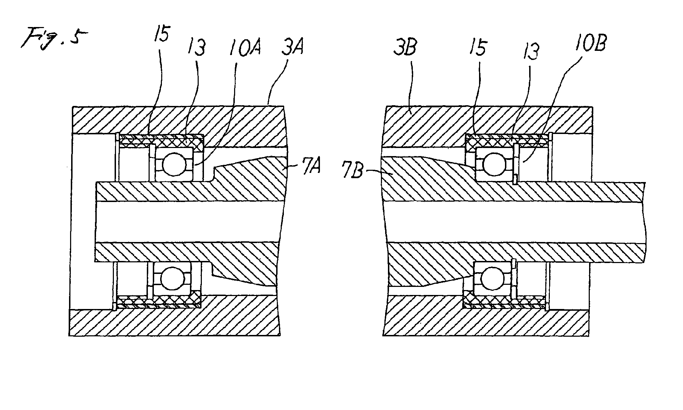

In the embodiment thus far described, moreover, the elastic member is the O-ring but may also be made of a cylindrical rubbery lining 15, as shown in Fig. 4, so that it may be supported with respect to the drive shafts 3A and 3B by the elastic lining 15, the cylindrical spacer 13 and the bearings 10A and 10B. As shown in Fig. 5, still moreover, the cylindrical spacer 13 may also be fitted on the inner circumference of the drive shafts 3A and 3B, and the elastic lining 15 may also be mounted on the outer circumference of the spacer 13, so that the individual support rods 7A and 7B may be supported with respect to the drive shafts 3A and 3B by the bearings 10A and 10B, the cylindrical spacer 13 and the elastic lining 15.

An inductive heating roller device, in which support rods fixed in an inductive heating mechanism are inserted into the drive shafts of a roller and are supported on the inner faces of the drive shafts through bearings so that the inductive heating mechanism is held in a floating manner. Elastic members 14 are arranged between the outer faces of the support rods 7A and 7B and the inner faces of the drive shafts 3A and 3B so that the support rods 7A and 7B are supported on the inner faces of the drive shafts 3A and 3B through the elastic members 14 and the bearings 10A and 10B.

## Claims

1. An inductive heating roller device, comprising:
a roller (1);
an inductive heating mechanism (6);
support rods (7A, 7B) fixed in the inductive heating mechanism (6), the support rods being inserted into drive shafts (3A, 3B) of the roller (1) and supported on inner faces of the drive shafts (3A, 3B) through bearings (10A, 10B), and the inductive heating mechanism (6) being held in a floating manner,
**characterized by**
elastic members (13) arranged between the support rods (7A, 7B) and the bearings (10A, 10B).

2. An inductive heating roller device, comprising:
a roller (1);
an inductive heating mechanism (6);
support rods (7A, 7B) fixed in the inductive heating mechanism (6), the support rods being inserted into drive shafts (3A, 3B) of the roller (1) and supported on inner faces of the drive shafts (3A, 3B) through bearings (10A, 10B), and the inductive heating mechanism (6) being held in a floating manner,
**characterized by**
elastic members (14) arranged between the inner faces of the drive shafts (7A, 7B) and the bearings (10A, 10B).

## Patentansprüche

1. Induktionsheizwalzenvorrichtung mit:
einer Walze (1);
einem Induktionsheizmechanismus (6);
Stützstäben (7A, 7B), die in dem Induktionsheizmechanismus (6) befestigt sind, wobei die Stützstäbe in Antriebswellen (3A, 3B) der Walze (1) eingebracht und durch Lager (10A, 10B) an Innenflächen der Antriebswellen (3A, 3B) gestützt sind und wobei der Induktionsheizmechanismus (6) auf eine schwebende Weise gehalten ist,
**gekennzeichnet durch**
elastische Bauteile (13), die zwischen den Stützstäben (7A, 7B) und den Lagern (10A, 10B) angeordnet sind.

2. Induktionsheizwalzenvorrichtung mit:
einer Walze (1);
einem Induktionsheizmechanismus (6);
Stützstäben (7A, 7B), die in dem Induktionsheizmechanismus (6) befestigt sind, wobei die Stützstäbe in Antriebswellen (3A, 3B) der Walze (1) eingebracht und durch Lager (10A, 10B)an Innenflächen der Antriebswellen (3A, 3B) gestützt sind, und wobei der Induktionsheizmechanismus (6) auf eine schwebende Weise gehalten ist,
**gekennzeichnet durch**
elastische Bauteile (14), die zwischen den Innenflächen der Antriebswellen (3A, 3B) und den Lagern (10A, 10B) angeordnet sind.

## Revendications

1. Dispositif à rouleau de chauffage par induction, comprenant :
un rouleau (1);
un mécanisme de chauffage par induction (6);
des tiges de soutien (7A, 7B) fixées dans le mécanisme de chauffage par induction (6), les tiges de soutien étant insérées dans des arbres d'entraînement (3A, 3B) du rouleau (1) et soutenues sur des faces intérieures des arbres d'entraînement (3A, 3B) à travers des paliers (10A, 10B), et le mécanisme de chauffage par induction (6) étant maintenu d'une manière flottante,
**caractérisé par**
des organes élastiques (13) agencés entre les tiges de soutien (7A, 7B) et les paliers (10A, 10B).

2. Dispositif à rouleau de chauffage par induction, comprenant :
un rouleau (1);
un mécanisme de chauffage par induction (6);
des tiges de soutien (7A, 7B) fixées dans le mécanisme de chauffage par induction (6), les tiges de soutien étant insérées dans des arbres d'entraînement (3A, 3B) du rouleau (1) et soutenues sur des faces intérieures des arbres d'entraînement (3A, 3B) à travers des paliers (10A, 10B), et le mécanisme de chauffage par induction (6) étant maintenu d'une manière flottante,
**caractérisé par**
des organes élastiques (14) agencés entre les faces intérieures des arbres d'entraînement (7A, 7B) et les paliers (10A, 10B).
